# EUROPEAN PATENT APPLICATION

(11) **EP 0 897 740 A2**
(43) Date of publication of application: **24.02.1999**
(21) Application number: 98500162.7
(22) Date of filing: 10.07.1998
(51) Int. Cl.: B01D 47/02, B01D 47/10, A47L 9/18

(54) **Ecological vacuum cleaner with venturi effect**

(30) Priority: 14.07.1997 ES 9701558; 08.07.1998 ES 9801450
(71) Applicant: Garcia Sanchez, Carlos, 28002 Madrid (ES)
(72) Inventor: Garcia Sanchez, Carlos, 28002 Madrid (ES)
(74) Representative: Del Santo Abril, Natividad

(57) **Abstract**

**SUMMARY**

The vacuum cleaner comprises a sort of bell 9 into which a main turbine 1 is located which is operated by air pressure, which causes a gas aspiration and its washing through atomised water caused by venturi effect of the air under pressure at the end of an immersed tube 11 in a water tank 7; being it possible for it to have at the gas outlet an auxiliary turbine 25 which causes a mixed axial/radical flux aspiration thanks to the venturi effect caused in several of the shunt ducts 27, incorporating besides two solid separation lattices 21 and 22, whose slats are oriented in such a way as to configure a labyrinth like path and being the set complemented with a dust/gas filter 23 and a conventional muffler 26.

## Description

The invention refers to a vacuum cleaner with venturi effect, foreseen and conceived mainly to aspirate vitiated ambiences, such as those there may be in certain premises in which it is difficult and some times impossible to ventilate in order to renew the pernicious air. Besides, the vacuum cleaner can be used to clean and paint surfaces, by complementing it with an air-compressor.

In relation to the knowledge or the existence of means which carry out the same functions as those of the vacuum cleaner of the invention, the applicant does not know of any devices with the simplicity and means of the vacuum cleaner subject matter of the present application, since those known are complex in their structure and functioning, and are based on functional physical principles very different from those which concur in the present case.

In particular, the vacuum cleaner which is preconized is designed to carry out extractions of gases and/or solid particles which are found in suspension in determinate premises, as for instance aeroplanes, being these gases or air aspirated, purified and returned to the atmosphere or ambience where they came from, all that based on an aspiration carried out by a main motive turbine which is operated by air pressure, in such a way that the gases, air or particles aspired by the turning of the corresponding vanes of the turbine, are conducted through a duct into a tank in which two areas are established, a lower one which contains water and an upper one precisely into which the referred duct flows. The top reduced diameter end of a tube immersed in the water of the lower part is also located in this upper area, all of it in such a way that by applying air under pressure at that upper end of the tube, a venturi effect will be caused, and water will be suctioned which, when mixed with the air under pressure, is atomised throughout the area into which precisely the particle and/or pernicious gas aspiration duct flows. This atomisation of the water will produce the purification of these gases, which will return by themselves to the atmosphere where they came from, while the solid particles deposit on the surface of the water, being it possible to remove them by any adequate system or means.

The water suctioned from the lower part of the tank, in order to carry out the purification of the gases and avoid that the suspended particles escape outside, returns by gravity to that area, so that the water expense is minimum.

A more powerful version of the ecological vacuum cleaner subject matter of the invention has also been foreseen. Basically the increase in the aspiration capacity is due to the introduction at the area where the aspirated gas is expelled of an auxiliary motive turbine driven by air under pressure. This auxiliary motive turbine drives a coaxial aspirator which compensates the overpressure produced at the upper area of the tank by the main motive turbine, being some side ducts foreseen on the periphery of the auxiliary turbine in such a way that a certain venturi effect is caused at the same in order for the flux not to be purely axial.

Even then, and given the increase caused in the velocity of the aspirated gases, a double lattice with alternate sloped slats has been foreseen which, acting as a labyrinth provokes a separation of the solids in suspension preventing that they are expelled outside. On the other hand, the greater aspiration capacity has made possible to introduce a dust/gas filter of the conventional activated carbon type despite the high load lost which this type of filter causes. Finally it has been necessary to incorporate a conventional sound filter, given the nearness of the auxiliary motive turbine to the aspirated gas expulsion outlet.

An advantage of the vacuum cleaner is that the whole set can be transported by hand from a place to another, with no problem, since it turns out to be reduced in weight.

The vacuum cleaner is mainly indicated for use in the aeroplanes, since it does not use electric power for its functioning and thus completely avoids the possible risks of fires or explosions caused by the gases emanating out of fuel tanks.

Other important uses of the vacuum cleaner with venturi effect are that it may be used to paint and/or clean difficult access surfaces, such as the inside of aeroplanes and landing gear receptacles.

With minimum and simple modifications, the vacuum cleaner can also function with electric power input, allowing its use anywhere.

In order to complement the description which will be carried out next and to help a better understanding of the characteristics of the invention, a detailed description will be developed based on a set of planes which is attached to this descriptive report, being an integrating part of the same, and where with a merely descriptive and not limiting purpose the following has been represented:

In figure 1, a schematic representation of the vacuum cleaner of the invention in general perspective view is shown.

In figure 2, a vertical plane section view of the top part corresponding to the area in which the entrance of the gases and pernicious particles aspirated takes place, as does the water suction and atomisation, with the corresponding purification of those aspirated gases.

In figure 3, a vertical plane section view of the set which incorporates the improvements of the aspiration capacity is shown.

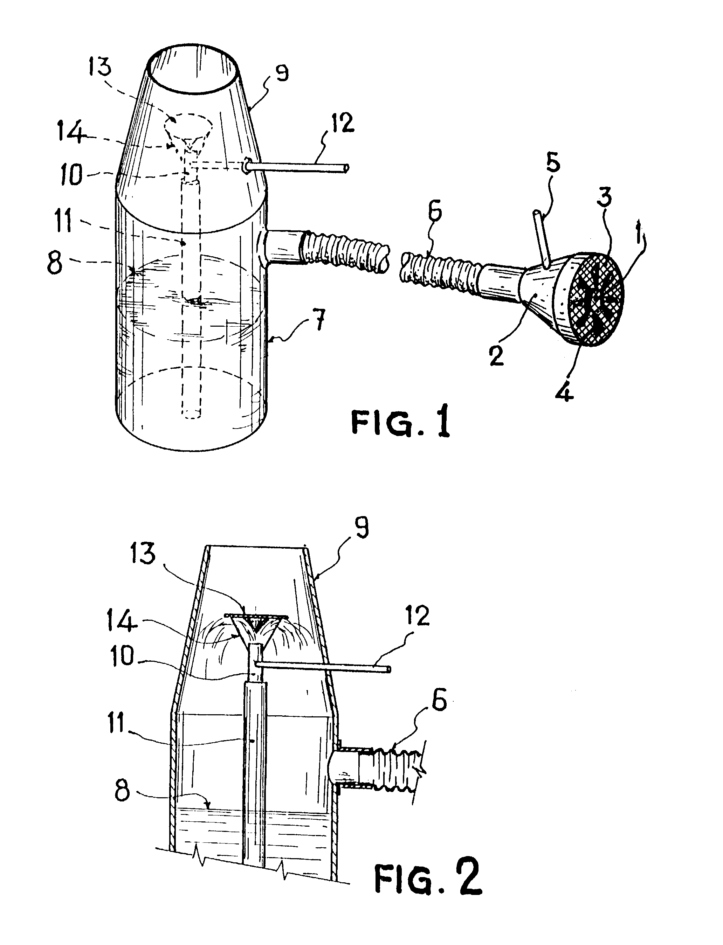

As can be seen in figures 1 and 2, the vacuum cleaner of the invention comprises a main turbine 1 assembled in a concentric manner in the inside of a bell like structure 2 with a protection lattice 3 at the entrance of the former. The main turbine 1 incorporates the vanes 4 and is made to turn by air pressure. The bell 2, besides having a main feeding channel 5 foreseen on the side as an air inlet for a compressor, continues on its narrower diameter or opposite to the entrance end with a long flexible duct 6 which flows into a tank 7 in which two areas are foreseen, a lower one containing a water volume which reaches a certain level 8, and an upper one, precisely into which the flexible duct 6 flows. In this upper part, delimited by the tubular section 9 opened on the top, the upper and narrow end 10 of a tube 11 partly immersed in the water contained in the lower area has been foreseen, with the peculiarity that at this end 10 a pressured air blowing feed channel ends sideways 12, and finally a cap 13 made of a inverted conical surface held by suspenders 14 to the top and narrow end 10 of the tube 11.

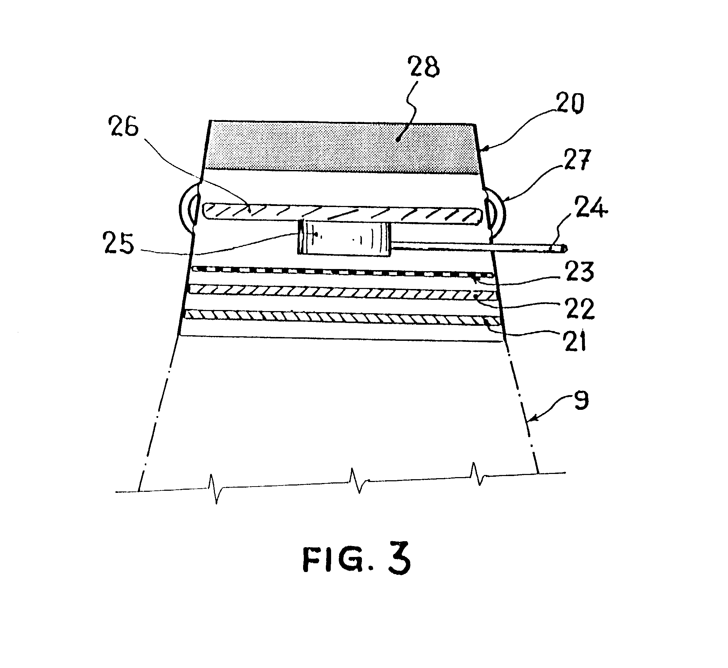

As can be seen in figure 3, on what used to be the aspirated gas outlet of the ecological vacuum cleaner and more in particular, on its top area with cone frustum shape 9, a cone frustum body 20 can be assembled with the same or different taper in which from the bottom to the top we find: two separation lattices for solids 21 and 22, which have their slats oriented at 45° of the axis of the cone frustum body 20 and orthogonal amongst themselves, a dust/gas filter 23, an auxiliary motive turbine 25, fed by air under pressure through the auxiliary feed channel 24 integral to an aspirator wheel 26, several shunt ducts 27 which surpass the mentioned aspirator wheel 26 and finally a conventional muffler filter 28.

The functioning is as follows:

The air under pressure coming from the blow feed channel 12 causes the water to be suctioned through the immersed tube 11, the water when falling onto the conical surface of the cap 13 produces a rain like effect, which when mixed with the air under pressure atomises and clean the air contained in that area, i.e., the gases aspirated of the pernicious or contaminated room, leaving clean to the outside, while the solid particles decant due to that atomised water rain, on the upper surface or level 8 of that contained in the inferior area of the tank 7.

When the auxiliary motive turbine 25 is fed air under pressure through the auxiliary feeding channel 24, the aspirator wheel 26 is driven, causing a double axial and radial flux thanks to the venturi effect caused at the shunt ducts 27, which reduces the overpressure caused in the upper cone frustum area 9 by the increase in the power of the main motive turbine 1 from the basic embodiment up to acceptable values; being the gases subsequently expelled outside through a muffler filter 28.

## Claims

1. Ecological vacuum cleaner with venturi effect, which being specially applicable in pernicious or contaminated premises to aspire the gases and particles, and achieve a purification of the same, being it susceptible of being used to paint and/or clean surfaces, it is characterised by its being constituted by a main motive turbine 1 operated by air pressure, whose turning causes an aspiration of gases and particles of the room in which such turbine is located, which is assembled on a tubular bell shaped section 2 with its base or larger inlet furnished with a protection lattice 3, while its smaller base or opposed end extends into a flexible duct 6 which flows into a tank containing water 7, which occupies the lower area of said tank, while the area defined above the water level 8 is into which the flexible duct 6 flows and in which the top and small in diameter end 10 is located, corresponding to a tube 11 immersed partly in the water; having foreseen that at the mentioned small in diameter end 10 of the immersed tube 11 a pressured air blow feed channel 12 be connected sideways, producing, due to the venturi effect, a water suction through the immersed tube 11 whose water falls onto its outlet on a cap inverted conical surface 13 held by suspenders 14 to the mentioned small in diameter end 10 of the immersed tube 11, causing the atomisation of the water by the air under pressure, which causes the cleaning of the gases of that area and the fall of the solid particles onto the water of the tank.

2. Ecological vacuum cleaner with venturi effect, according to claim 1 characterised by the introduction at the aspirated gas outlet of an auxiliary motive turbine 25, which driving a coaxial aspirator wheel 26 causes a mixed air axial/radial flux, thanks to the existence of several shunt ducts 27, located on the perimeter of the cone frustum body 20 which serves as the seat for the set made up by the auxiliary motive turbine 25 and the aspirator wheel 26.

3. Ecological vacuum cleaner with venturi effect according to the above claims, characterised by the fact that at the entrance of the cone frustum body 20 there are a couple of lattices for the separation of solids 21 and 22 which have several slats oriented at 45° of the axis of the mentioned cone frustum body 20 but orthogonal amongst themselves those corresponding to the two lattices, configure a labyrinth like path in order to retain the solids in suspension.

4. Ecological vacuum cleaner with venturi effect, according to the above claims characterised by having on the solid separation lattices 21 and 22 a conventional dust/gas filter 23, whose presence is enabled thanks to the increased aspiration power.

5. Ecological vacuum cleaner with venturi effect, according to the above claims, characterised by having at the aspiration gas outlet a muffler filter 28, whose presence is convenient due to the introduction of the set made up of the auxiliary motive turbine 25 and the aspirator wheel 26.
